# EUROPÄISCHE PATENTSCHRIFT

(11) **EP 2 690 446 B1**
(45) Veröffentlichungstag und Bekanntmachung des Hinweises auf die Patenterteilung: **07.12.2016**
(21) Anmeldenummer: 12178018.3
(22) Anmeldetag: 26.07.2012
(51) Int. Cl.: G01N 1/02, G01N 1/18, G01N 35/10

(54) **Probenteiler**
Sample divider
Diviseur d'échantillon

(43) Veröffentlichungstag der Anmeldung: 29.01.2014
(73) Patentinhaber: Mettler-Toledo GmbH, 8606 Greifensee (CH)
(72) Erfinder: Weber, Christoph, 8330 Pfäffikon (CH); Trüb, Marcel, 8408 Winterthur (CH); Schlegel, Manuel, 7323 Wangs (CH); Vergés, Amadeo, 8906 Bonstetten (CH)
(74) Vertreter: Mettler-Toledo

(56) Entgegenhaltungen:
- US-A- 3 427 135
- US-A- 3 848 633
- US-A- 5 303 598
- US-A1- 2005 277 199
- US-A1- 2011 314 900

## Beschreibung

Die Erfindung betrifft einen Probenteiler und ein Verfahren zur Teilung einer Probe in mindestens zwei repräsentative Teilproben.

Die Aufteilung oder Teilung einer Probe in mindestens zwei repräsentative Teilproben wird beispielsweise bei der Aufbereitung einer aus einem Medium entnommen Primärprobe zur weiteren Verarbeitung und/oder Analyse durchgeführt. Die Teilproben können beispielsweise unterschiedlichen chemischen, biologischen und/oder physikalischen Analysen unterworfen werden oder unterschiedlich weiterverarbeitet werden.

Der Begriff "Primärprobe" bezeichnet hier eine beliebige, definierte Teilmenge, welche direkt einem Medium entnommen wurde. Die Primärprobe weist somit dieselben Eigenschaften wie das Medium zum Zeitpunkt der Entnahme auf. Primärproben werden beispielsweise chemischen, physikalischen, biologischen, mikrobiologischen, pharmazeutischen, und/oder lebensmitteltechnischen Prozessen zur Analyse und/oder Weiterbearbeitung entnommen. Weiterhin kann eine Primärprobe auch jeglichem anderen flüssigen, gasförmigen, festen oder Mischungen daraus umfassenden Medium entnommen, wenn gewünscht aufgearbeitet, und anschliessend analysiert werden. Die Primärprobe, wie auch das Medium, können flüssig, gasförmig und/oder fest sein.

Der Begriff "Probe" wird hier allgemein für die Menge verwendet, welche in eine oder mehrere Teilproben aufgeteilt wird. Eine Probe kann somit sowohl die Primärprobe als auch eine aufgearbeitete und/oder verdünnte Primärprobe bezeichnen.

Die Probe und/oder die Teilproben sind "repräsentativ" für das Medium und weisen chemische und physikalische Eigenschaften auf, die direkt mit denen des Mediums korreliert sind, so dass durch Analyse der Probe oder Teilprobe die Eigenschaften des Mediums ermittelt oder zumindest auf diese zurückgeschlossen werden kann. Eine derartige Probe oder Teilprobe wird im Folgenden auch als "repräsentative Probe" oder "repräsentative Teilprobe" bezeichnet.

Anhand der Probe oder einer daraus hervorgegangenen Teilprobe ist es möglich, beispielweise die Zusammensetzung, physikalische oder chemische Parameter des Mediums oder die Konzentration eines oder mehrerer Bestandteile des Mediums zu ermitteln oder der Ablauf einer Reaktion oder die Produktentstehung zu verfolgen, um nur einige Beispiele zu nennen.

Am bekanntesten ist sicherlich die manuelle Aufteilung einer im Wesentlichen einheitlichen Primärprobe in zwei oder mehr Teilproben, mit im Wesentlichen gleichen Eigenschaften und gleicher Zusammensetzung. Die einzelnen Teilproben können gleiche oder unterschiedliche Mengen der Primärprobe enthalten. Die Probe kann somit symmetrisch oder asymmetrisch in mindestens zwei Teilproben aufgeteilt werden. Hierzu wird einem Medium in einem Behältnis oder in einer Umgebung eine Primärprobe entnommen, wenn gewünscht aufgearbeitet, und anschliessend manuell aufgeteilt. Je nach Beschaffenheit der Probe kann die Probenteilung durch volumetrische und/oder gravimetrische Prozesse erfolgen.

Neben einer rein manuellen Aufteilung ist auch eine teilweise oder vollständig automatisierte Aufteilung einer Probe möglich. Hierzu sind verschiedene Hilfsmittel, wie beispielsweise Mehrfachpipetten oder volumetrische und/oder gravimetrische Dosiersysteme bekannt.

Sowohl der manuellen als auch der automatisierten Probenteilung ist gemeinsam, dass die Primärprobe zunächst entnommen, also aus ihrer ursprünglichen Umgebung entfernt wird, und erst anschliessend und häufig unter abweichenden Bedingungen aufgeteilt wird. Dieses ist jedoch vor allem für Medien möglich, welche sich nach der Entnahme nicht oder nur unwesentlich verändern, so dass die Primärprobe oder die Teilprobe auch bei der anschliessenden Analyse noch eine "Kopie" des Mediums darstellt und im Wesentlichen identische Eigenschaften wie das Medium hat. Proben aus Medien die sich rasch verändern sollten daher unter bekannten Bedingungen entnommen und aufgeteilt werden, zum Beispiel in einer Glovebox mit einstellbaren Umgebungsparametern.

Die aufgezeigte Aufteilung einer Probe in mehrere Teilproben stösst an ihre Grenzen bei der Aufteilung kleiner Proben, bei Medien mit ungleichmässiger Zusammensetzung, wie beispielsweise einer flüssigen Probe mit Feststoffanteilen, und/oder wenn eine Probe im Wesentlichen ohne Umgebungswechsel aufgeteilt werden soll.

Derartige Proben fallen beispielsweise bei kleinen Produktionsmengen und/oder im Labor im Rahmen der Forschung und Entwicklung an. Ein Beispiel stellt die Prozessentwicklung und/oder Forschung in sogenannten Laborreaktoren dar, welche Reaktionsvolumina von wenigen Millilitern bis hin zu einigen Litern aufweisen können und im Vergleich zu Prozessanlagen mit Grössen bis zu einigen zigtausend Litern recht klein sind. Eine zu entnehmende Probe sollte im Verhältnis zum vorhandenen Medium möglichst klein, trotzdem noch repräsentativ und für eine nachfolgende Aufteilung und Analyse ausreichend gross sein. Diese Kriterien sind vor allem bei kleinen Reaktionsvolumina nur schwer zu erfüllen. Die Probenentnahme aus einem Behältnis, insbesondere einem Laborreaktor, kann beispielsweise mit einer in US 2011/00318243 A1 oder US 2011/0314900 A1 beschriebenen Vorrichtung und/oder Verfahren erfolgen, bei welchem eine Primärprobe entnommen, eine möglicherweise ablaufende Reaktion direkt in der Aufnahme zur Probenahme durch Zufügen eines geeigneten Quenchmediums zur Primärprobe gestoppt wird und anschliessend die Probe mit einem geeigneten Spülmedium aus der Aufnahme gespült werden kann. Diese Art der Probenahme eignet sich nicht nur für flüssige Proben, sondern insbesondere auch für flüssige bis zähflüssige Medien, aufgeschlämmte Medien (eng. slurry) und auch für einige fliessfähige feste Medien, also solche die im Wesentlichen aus fliessfähigen Feststoffen bestehen. Medien oder Proben mit einer ungleichmässigen Zusammensetzung werden auch als "inhomogen" bezeichnet.

Durch die Verwendung eines Spülmediums erhöht sich das Volumen der Probe im Vergleich zur Primärprobe. Die Primärprobe wird verdünnt. Je nachdem wie gut sich die Primärprobe mit dem Spülmedium vermischt, kann die Primärprobe mit dem Spülmedium eine Probe mit einer gleichförmigen oder einer über die Zeitdauer des Spülvorgangs veränderliche Zusammensetzung bilden. Eine Probe mit einer zeitlich veränderlichen Zusammensetzung kann auch bei einer Probenahme aus einem sehr schnell reagierenden Medium und/oder bei einer kontinuierlichen Probenahme entstehen. Eine Probe mit einer zeitlich veränderlichen Zusammensetzung wird im Folgenden auch als "zeitlich inhomogene" Probe bezeichnet.

Die zuvor beschriebene manuelle Aufteilung einer Probe kann sowohl an einer gleichförmigen Probe wie auch an einer zeitlich inhomogenen Probe durchgeführt werden, da hier die gesamte Probe zusammen mit dem Spülmedium aus der Umgebung des Mediums vollständig entfernt und erst danach aufgeteilt wird.

Eine automatisierte Aufteilung einer Probe in repräsentative Teilproben hingegen ist auf diese Weise jedoch nur bei einer im Wesentlichen gleichförmigen, vor allem einer zeitlich gleichförmigen oder zeitlich homogenen Probe möglich. Eine zeitlich inhomogene Probe kann so nur in zeitlich definierte Teilproben aufgeteilt werden, wobei jede dieser Teilproben nur einen zeitlichen Ausschnitt der Zusammensetzung der zeitlich inhomogenen Probe aufweist. Derartige Teilproben fallen beispielsweise bei einer chromatographischen Aufspaltung einer Probe an.

Die US 3 427 137 A offenbart ein Gerät zur automatisierten Analyse mehrerer Proben von Blut oder anderen Körperflüssigkeiten. Dabei ist das Gerät in der Lage mehrere Blutproben aufzunehmen, die nacheinander auf je eine Anzahl von Eigenschaften analysiert werden. Die auf einem Probenzufuhrgerät angeordneten Probenbecher werden einem Entnahmerohr zugeführt, wonach ein gemessenes Volumen jeder Probe abgesaugt wird. Über ein Rohrverzweigungsglied wird die Probe aufgeteilt und die Teilmengen werden mehreren deformierbaren Pumpenschläuchen zugeführt, welche Pumpenschläuche zu einer Dosierpumpe, beispielsweise einer Schlauchpumpe, gehören. Jede dieser Teilmengen oder Teilströme wird auf eine besonders interessierende Eigenschaft untersucht.

Die US 5 303 598 A offenbart ein Verfahren und eine Vorrichtung zur Entnahme einer repräsentativen Milchprobe aus einem Förderstrom einer Milchcharge von einem Behälter zu einem Sammeltank. Diese repräsentative Probe wird in einem Probengefäss gesammelt mit dem Ziel, dass die repräsentative Probe in etwa ein konstantes Volumen unabhängig vom Volumen der geförderten Milchcharge haben sollte. Dieses in etwa ein konstantes Volumen resultiert daraus, dass für Untersuchungen und Tests eine bestimmte Mindestmenge an Milch erforderlich ist. Darüber hinaus wird mit der repräsentativen Probe angestrebt, die Milchprobe über den gesamten Förderzyklus der entsprechenden Milchcharge zu ziehen.

Die US 3 848 633 A offenbart eine Vorrichtung zur genauen Aufteilung eines strömenden Fluids in mehrere Teile von ausgewählten Volumina. Die Teile des Fluids, insbesondere Blutserum oder ein anderes biologisches Fluid, sollen getrennt zu einer Analyseeinrichtung für die Messung verschiedener Bestandteile der ursprünglichen Probenflüssigkeit geführt werden. In eine Strömungsaufteilungskammer führt eine einzige Zuführungsleitung, mehrere Ausgangsleitungen führen von der Kammer weg. Die Kammer weist ein sehr kleines Volumen auf und die Fluidwege von der Zuführungsleitung zu den Ausgangsleitungen sind symmetrisch angeordnet und besitzen die gleich Länge. Es ist eine erste und eine zweite Aufteilungsstufe vorgesehen, so dass eine Aufteilung in unterschiedliche Teilmengenvolumina erfolgen kann. Ferner ist eine Pumpe zur Förderung des Fluids durch beide Aufteilungsstufen vorhanden.

Es ergibt sich die Aufgabe der Bereitstellung eines Geräts sowie eines Verfahrens zur Probenteilung, welches die automatische Aufteilung einer Probe mit einer zeitlich variierenden Zusammensetzung in zwei oder mehr repräsentative Teilproben ermöglicht.

Ermöglicht wird dieses für eine fliessfähige Probe durch einen Probenteiler zur Aufteilung einer Probe in mindestens zwei Teilproben. Der Probenteiler umfasst ein Leitungssystem mit einer ersten Leitung, einer zweiten Leitung, mindestens einer dritten Leitung und mindestens einem Ausgang zur Entnahme der Teilproben, eine Probenkammer für die inhomogene Probe, welche mit dem Leitungssystem verbunden ist und einen Einlass für die Probe aufweist, eine erste Pumpe mit einem ersten Fördermenge und mindestens eine zweite Pumpe mit einem zweiten Fördermenge, wobei die erste und die zweite Pumpe die Probe im Leitungssystem befördern. Die Probekammer ist zwischen der erste Pumpe und dem mindestens einen Ausgang des Leitungssystems angeordnet ist. Die erste Leitung ist zwischen der ersten Pumpe und der Probenkammer, die zweite Leitung zwischen der Probenkammer und dem mindestens einen Ausgang und die mindestens eine dritte Leitung zwischen der mindestens einen zweiten Pumpe und dem mindestens einen Ausgang angeordnet, wobei die Leitungen gleichförmige Leitungsquerschnitte aufweisen oder wobei zumindest die zweite und dritte Leitung unterschiedliche Leitungsquerschnitte aufweisen. Die erste und die mindestens eine zweite Pumpe laufen synchron, so dass die inhomogene Probe beim Durchlaufen des Leitungssystems gleichzeitig in mindestens zwei repräsentative Teilproben aufgeteilt wird.

Mit dem erfindungsgemässen Probenteiler können verschiedenartige Proben in repräsentative Teilproben mit im Wesentlichen gleicher Zusammensetzung aufgeteilt werden. Die fliessfähige Probe kann flüssig sein oder Anteile an Feststoffen enthalten. Ebenso könnten fliessfähige Feststoff-Proben oder solche die eine Feststoffmischung enthalten aufgeteilt werden.

Insbesondere ermöglicht der erfindungsgemässe Probenteiler auch die Aufteilung einer zeitlich inhomogenen Probe in mindestens zwei repräsentative Teilproben.

Die Pumpen sind so eingestellt, dass sie volumetrisch synchron arbeiten und dadurch die Probe in mindestens zwei Teilproben aufteilen können, so dass die Probe und die Teilproben idealerweise eine gleiche Zusammensetzung aufweisen. Insbesondere weisen die erste und die zweite Pumpen den gleichen Förderhub auf. Der Förderhub bezeichnet die Taktung einer Pumpe, die Fördermenge die Menge welche von einer Pumpe pro Förderhub gefördert wird. Das Volumen der einzelnen Teilproben kann einerseits durch die Fördermenge der jeweiligen Pumpe und/oder durch das Verhältnis der Leitungsquerschnitte im Leitungssystem bestimmt werden. Das Volumen der Teilproben kann durch entsprechende Auswahl der Pumpen eingestellt werden, wobei das Volumen-Verhältnis der Teilproben zueinander dem Verhältnis der Fördermengen der Pumpen zueinander entspricht, wenn das Leitungssystem einen gleichförmigen Leitungsquerschnitt aufweist. Weiterhin können Leitungen mit unterschiedlichen Querschnitten eingesetzt werden, welche eine asymmetrische Aufteilung der Probe beim Einsatz von Pumpen mit gleichen Fördermengen bewirken können. Selbstverständlich es auch möglich, dass der Probenteiler sowohl Pumpen mit unterschiedlichen Fördermengen als auch Leitungen mit unterschiedlichem Querschnitt umfasst. Eine Probe und insbesondere eine zeitlich inhomogene Probe kann somit durch entsprechende Auswahl der Fördermengen der Pumpen oder der Leitungsquerschnitte des Leitungssystems in mindestens zwei repräsentative Teilproben aufgeteilt werden.

Die repräsentativen Teilproben und auch die Probe weisen im Wesentlichen die gleiche Zusammensetzung auf. Der Begriff "gleiche Zusammensetzung" wird hier für die chemische Zusammensetzung der Probe und/oder der Teilproben verwendet und soll so verstanden werden, dass die Probe und die Teilproben im Rahmen der Ungenauigkeit einer chemischen, physikalischen oder biologischen Analyse gleiche Ergebnisse liefern. Eine Probe oder Teilprobe ist "repräsentativ" für das Medium aus der die Probe oder eine dieser zugrundeliegende Primärprobe entnommen wurden und weisen chemischen und physikalische Eigenschaften auf, die direkt mit denen des Mediums korreliert sind, so dass durch Analyse der Probe oder Teilprobe auf die Eigenschaften des Mediums ermittelt oder zumindest zurückgeschlossen werden kann.

Der Probenteiler umfasst eine erste und mindestens eine zweite Pumpe, welche synchron arbeiten. Der Probenteiler kann mehrere zweite Pumpen mit gleicher oder unterschiedlicher Fördermenge aufweisen. Vorzugsweise wird die inhomogene Probe beim Durchlauf durch das Leitungssystem in eine der Anzahl der Pumpen entsprechende Anzahl von repräsentativen Teilproben aufgeteilt. Jede Teilprobe kann mit einer separaten Pumpe erzeugt werden. Die Anzahl an Teilproben ist selbstverständlich auch von der Grösse oder dem Volumen der Probe selbst und der Art und Weise der gewünschten Weiterbehandlung der einzelnen Teilproben abhängig und insbesondere durch die Untergrenzen der verschiedene Analysemethoden für die zu analysierende Teilproben limitiert.

Die erste Pumpe kann als unidirektionale oder bidirektionale Pumpe ausgestaltet sein. Die mindestens eine zweite Pumpe ist eine bidirektionale Pumpe. Eine unidirektionale Pumpe kann die Probe nur in einer Richtung durch das Leitungssystem bewegen, eine bidirektionale Pumpe kann die Probe sowohl ansaugen als auch ausstossen und somit in zwei Richtungen durch das Leitungssystem bewegen.

In einer bevorzugten Ausführung ist die erste Pumpe als unidirektionale Pumpe ausgestaltet, so dass sie die Probe nur von der Probenkammer durch das Leitungssystem zum Ausgang fördern kann. Diese Anordnung ist sehr vorteilhaft, da die erste Pumpe auf diese Weise nicht direkt mit der Probe in Kontakt kommt und somit auch nicht durch die Probe kontaminiert werden kann.

In einer weiteren Ausführung kann die erste Pumpe als bidirektionale Pumpe ausgestaltet sein, diese ist insbesondere vorteilhaft zur besseren Vermischung der Probe in der Probenkammer oder auch zur Reinigung der Probenkammer mit einem von der ersten Pumpe in die Probenkammer gepumpten Reinigungsmittel.

Die mindestens eine zweite Pumpe kann eine von der ersten Pumpe abweichender Fördermenge aufweisen. Weitere Ausgestaltungen des Probenteilers können auch eine erste und mindestens eine zweite Pumpe mit gleicher Fördermenge umfassen. Der Probenteiler kann mehrere zweite Pumpen mit gleicher oder unterschiedlicher Fördermenge aufweisen.

Das Verhältnis der Teilprobe-Volumina zueinander ist mit dem Verhältnis der Fördermengen der entsprechenden Pumpen korreliert, insbesondere wenn das Leitungssystem einen gleichförmigen Leitungsquerschnitt aufweist, also alle Leitungen des Leitungssystems denselben Querschnitt haben. Werden Pumpen mit gleichen Fördermengen eingesetzt, so wird die Probe in Teilproben mit gleichen Volumina aufgeteilt. Werden hingegen Pumpen mit unterschiedlichen Fördermengen eingesetzt, so kann die Probe asymmetrisch in Teilproben mit unterschiedlichen Volumina aufgeteilt werden. Unabhängig vom Volumen-Verhältnis der Teilproben zueinander, können mit einem erfindungsgemässen Probenteiler repräsentative Teilproben erzeugt werden.

Vorzugsweise werden Pumpen als erste und/oder mindestens eine zweite Pumpe eingesetzt, welche volumetrisch synchronisiert werden können. Besonders bevorzugt ist der Einsatz von baugleichen Pumpen, welche sich nur in der Fördermenge unterscheiden, um die Aufteilung der Probe in Teilproben möglichst wenig zu beeinflussen. Eingesetzt werden können beispielsweise Taumelkolbenpumpen oder Dosierpumpen (eng. metering pump).

Der Probenteiler kann eine eigenständige Einheit sein, oder auch in ein System eingebunden werden bzw. an ein System angeschlossen werden, in dem sich unter anderem das Medium befindet, welchem die Probe entnommen wird.

Über das Verhältnis der Leitungsquerschnitte der zweiten und der mindestens einen dritten Leitung und dem mindestens einen Ausgang kann das Volumenverhältnis der mindestens zwei Teilproben zueinander beeinflusst werden. Dieses ist insbesondere dann vorteilhaft, wenn beispielsweise exakt baugleiche Pumpen mit gleichem Förderhub und gleicher Fördermenge eingesetzt werden oder auch zur Einstellung eines Volumenverhältnisses, welches aufgrund technischer Gegebenheiten allein durch Auswahl der Pumpen nicht realisiert werden kann.

Das Leitungssystem kann zudem mindestens einen weiteren Eingang umfassen, welcher die Zuleitung eines oder mehrerer Spülmedien, eines Quench-Mediums und/oder anderer Substanzen zur Konditionierung der Probe ermöglicht. Auf diese Weise kann beispielsweise die Probe direkt im Leitungssystem, vorzugsweise in der Probenkammer verdünnt, gequencht oder auf andere Art chemisch behandelt bzw. konditioniert werden. Der Begriff "konditionieren" wird hier allgemein für eine Behandlung der Probe mit mindestens einer weiteren Substanz verwendet.

Die Probenkammer kann sowohl ein separates Bauelement wie auch ein Leitungsteil des Leitungssystems sein. Das Leitungssystem kann je nach Anwendungsgebiet aus miteinander verbundenen Rohrelementen oder aus Schlauchelementen bestehen.

In einem weiteren Ausführungsbeispiel kann mindestens ein Ausgang des Leitungssystems mit einem Probengefäss, einem Probengestell oder einem Analysegerät verbunden werden. Auf diese Weise können die Teilproben entweder direkt mit dem angeschlossenen Analysegerät analysiert werden oder in ein geeignetes einzelnes Probengefäss oder in ein Probengefäss in einem Probengestell gefüllt werden. Vorzugsweise ist das Probengestell so ausgebildet, dass eine Vielzahl von Probengefässen einfach manuell oder automatisiert befüllt werden können. Derartige Probengestelle sind beispielsweise als Probenrack oder Probenkarussel von verschiedenen Herstellern erhältlich.

Das Analysegerät kann beispielsweise ein HPLC-Gerät (HPLC - High performance liquid chromatography), ein Gaschromatograph, ein Massenspektrometer, ein Infrarot-, Nahinfrarot-, UV/VIS- oder Raman-Spektrometer, ein NMR-Spektrometer oder ein anderes zur Analyse der Teilprobe geeignetes Gerät sein.

Der erfindungsgemässe Probenteiler kann zusammen mit einem Probennehmer zur Entnahme einer Primärprobe aus einem Medium Bestandteil eines Probenahme-System zur Aufteilung einer Probe, insbesondere einer zeitlich inhomogenen Probe, in mindestens zwei Teilproben sein.

Der Probenteiler als Teil des Probenahme-Systems umfasst ein Leitungssystem mit einer ersten Leitung, einer zweiten Leitung, mindestens einer dritten Leitung, einer ersten Pumpe mit einer ersten Fördermenge und mindestens einer zweiten Pumpe mit einer zweiten Fördermenge.

Der Probennehmer umfasst eine Probenkammer für die inhomogene Probe, welche zwischen der erste Pumpe und dem mindestens einen Ausgang des Leitungssystems angeordnet ist. Die Probenkammer umfasst mindestens eine Zuleitung und mindestens eine Ableitung und ist über die Ableitung mit dem Leitungssystem des Probenteilers verbunden. Die erste Leitung ist zwischen der ersten Pumpe und der Probenkammer, die zweite Leitung zwischen der Probenkammer und dem mindestens einen Ausgang und die mindestens eine dritte Leitung zwischen der mindestens einen zweiten Pumpe und dem mindestens einen Ausgang angeordnet, wobei die Leitungen gleichförmige Leitungsquerschnitte aufweisen oder wobei zumindest die zweite und dritte Leitung unterschiedliche Leitungsquerschnitte aufweisen.

Die erste und die mindestens eine zweite Pumpe laufen volumetrisch synchron, so dass die Probe beim Durchlaufen des Leitungssystems gleichzeitig in mehrere repräsentative Teilproben aufgeteilt wird.

Das Probenahme-System kann ferner ein Gehäuse und ein linear-verschiebliches Element umfassen, wobei das linear-verschiebliche Element verschiebbar im Gehäuse gelagert ist und wobei die Probenkammer an einem Ende des linear-verschieblichen Elements angeordnet ist, so dass diese zur Entnahme eine Primärprobe bei Verschiebung des linear-verschieblichen Elements in ein Medium eingetaucht oder herausgezogen werden kann.

Auf diese Weise kann dem Medium eine Primärprobe mit dem Probennehmer entnommen, gegebenenfalls in der Probenkammer konditioniert oder verdünnt werden, und die Probe anschliessend direkt dem Probenteiler zugeführt werden, so dass eine Probe zeitnah in mindestens zwei Teilproben aufgeteilt werden kann. Vorzugsweise ist die Probenkammer zumindest teilweise offen ausgestaltet, so dass diese beim Einfahren in das Medium eine Probe aufnehmen kann, welche dann beim Zurückziehen des linear-verschieblichen Elements im Gehäuse des Probennehmers in der Probenkammer eingeschlossen wird.

Vorzugweise kann die erste Pumpe sowohl dazu dienen, dem Medium eine Primärprobe zu entnehmen als auch zusammen mit der synchron laufenden zweiten Pumpe die inhomogene Probe in zwei Teilproben aufzuteilen. Die erste Pumpe kann eine unidirektionale oder eine bidirektionale Pumpe sein.

Weitere Ausgestaltungen des Probenahme-Systems umfassen die Möglichkeit mindestens eine weitere Substanz über die mindestens eine Zuleitung in die Probenkammer einzubringen, wenn diese im Gehäuse eingeschlossen ist, so dass die Primärprobe direkt in der Probenkammer gequencht, verdünnt oder anderweitig konditioniert werden kann. Dazu kann die Zuleitung der Probenkammer mit einem oder mehreren Vorratsbehältern verbunden werden, welche die entsprechende Substanz enthalten.

Je nach Art und Konsistenz des Mediums kann ein Spülmedium über eine Zuleitung in die Probenkammer eingeleitet werden, welches dazu verwendet werden kann die Probe aus der Probenkammer in das Leitungssystem des Probenteilers zu überführen und/oder die Probenkammer vor einer erneuten Probenahme zu reinigen.

Das Probenahme-System umfasst einen erfindungsgemässen Probenteiler, welcher eine beliebige der zuvor beschriebenen Ausgestaltungen aufweisen kann.

Ein Verfahren zur Aufteilung einer inhomogenen Probe in mindestens zwei repräsentative Teilproben mit einem erfindungsgemässen Probenteiler umfasst folgende Schritte: Inbetriebnahme der ersten und zweiten Pumpe, so dass diese volumetrisch synchron arbeiten. Einbringen einer Probe in das Leitungssystem und Aufteilen dieser Probe durch die synchron laufenden Pumpen in eine erste und zweite repräsentative Teilprobe.

In einer weiteren Ausgestaltung umfasst das Verfahren zudem einen Schritt, in welchem mindestens eine der Teilproben direkt in ein mit dem Probenteiler verbundenes Analysegerät eingebracht wird.

Verschiedene Ausführungsbeispiele eines erfindungsgemässen Probenteilers und eines Probenahme-Systems mit einem erfindungsgemässen Probenteiler werden anhand der folgenden Figuren näher beschrieben, wobei gleiche Elemente mit gleichen oder ähnlichen Bezugszeichen versehen sind. Die Figuren zeigen:
- Fig. 1: Schematische Darstellung eines Probenteilers mit zwei Pumpen;
- Fig. 2: Schematische Darstellung eines Probenteilers mit drei Pumpen;
- Fig. 3: Schematische Darstellung eines Probenahme-System mit Probennehmer und Probenteiler, welcher zwei Pumpen aufweist;

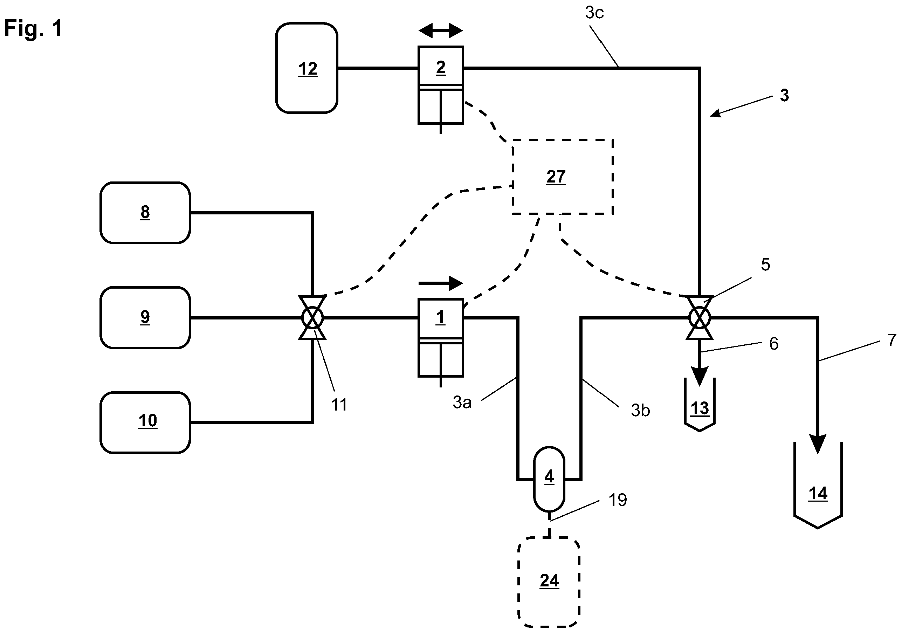

Figur 1 zeigt eine schematische Darstellung eines Probenteilers mit einer ersten Pumpe 1 und einer zweiten Pumpe 2, welche an ein Leitungssystem 3 angeschlossen sind.

Die erste Pumpe 1 ist in diesem Ausführungsbeispiel eine unidirektionale Pumpe, wie es durch den Pfeil angedeutet ist, und weist eine erste Fördermenge auf. Die erste Pumpe 1 kann nur in eine Richtung fördern.

Der Probenteiler umfasst ferner eine Probenkammer 4, welche an das Leitungssystem 3 angeschlossen ist und mindestens einen Eingang zur Aufnahme einer inhomogenen Probe aufweist. Der Eingang kann beispielsweise eine Öffnung in der Probenkammer 4 oder wie in Figur 1 angedeutet ein Anschluss 19 an eine weitere Leitung oder ein beliebiges Behältnis 24 sein, in welchem sich ein Medium befindet aus dem eine inhomogene Primärprobe entnommen werden kann. Die Probe bzw. die Primärprobe wird vorzugsweise direkt aus dem Behältnis 24 in die Probenkammer 4 eingebracht, kann jedoch auch manuell in die Probenkammer 4 eingebracht werden.

Die Probenkammer 4 ist zwischen der unidirektionalen ersten Pumpe 1 und einem Ausgangs-Ventil 5 angeordnet. Weiterhin sind die zweite Pumpe 2 sowie zwei Ausgänge 6, 7 über das Leitungssystem 3 mit dem Ausgangs-Ventil 5 verbunden. Das Ausgangs-Ventil 5 ist hier als Mehr-Wege-Ventil ausgestaltet und kann die Probenkammer 4 und die zweite Pumpe 2 mit dem ersten Ausgang 6 oder mit dem zweiten Ausgang 7 verbinden.

Das Leitungssystem 3 umfasst zumindest eine erste Leitung 3a, welche zwischen der ersten Pumpe 1 und der Probenkammer 4, eine zweite Leitung 3b, welche zwischen der Probenkammer 4 und dem Ausgangsventil 5 und eine dritte Leitung 3c, welche zwischen der zweiten Pumpe 2 und dem Ausgangsventil 5 angeordnet sind. Die zweite und dritte Leitung 3b, 3c können gleiche oder unterschiedliche Leitungsquerschnitte aufweisen. Der Einsatz von unterschiedlichen Leitungsquerschnitten hat einen Einfluss auf das Volumenverhältnis der mindestens zwei Teilproben.

Die zweite Pumpe 2 ist eine bidirektionale Pumpe mit einer zweiten Fördermenge, welche die Probe im Leitungssystem 3, vor allem in der ersten und zweiten Leitung 3a, 3b, in beide Richtungen fördern kann, wie es durch den Pfeil angedeutet ist. Die erste und zweite Pumpe 1, 2 können volumetrisch synchron betrieben werden, also zeitgleich arbeiten und so die Probe in repräsentative Teilproben aufteilen.

Weiterhin können ein oder mehrere Vorratsbehältnisse 8, 9, 10, hier sind drei gezeigt, welche Mittel zur Konditionierung der Probe, wie Quench- oder Verdünnungsmittel, oder Mittel zur Reinigung des Probenteilers umfassen können. Die Vorratsbehältnisse 8, 9, 10 sind über ein weiteres Ventil 11 an das Leitungssystem 3 angeschlossen und so der ersten Pumpe 1 vorgeschaltet, so dass diese mittels der Pumpe 1 über die Leitung 3a in das Leitungssystem 3 eingebracht werden können und so die Probe bzw. die Primärprobe in der Probenkammer 4 konditioniert werden kann oder die Probekammer 4 und/oder das Leitungssystem 3 gespült und/oder gereinigt werden können.

Weiterhin kann das Leitungssystem 3 des Probenteilers auch mit einem Gas oder Schutzgas aus einem der Vorratsbehältnisse 8, 9, 10 beaufschlagt werden. Eine Beaufschlagung mit einem Gas kann beispielsweise zum Sättigen der Probe mit dem entsprechenden Gas oder auch zum Trocknen des gesamten Leitungssystems 3 verwendet werden. Weiterhin kann es sich bei dem Gas um ein Schutzgas handeln, welches vor dem Einbringen einer Probe beispielsweise dazu verwendet wird Sauerstoff aus dem Leitungssystem 3 zu vertreiben, um zum Beispiel eine Oxidation der Probe in der Probenkammer 4 zu vermeiden.

Ein weiteres Vorratsbehältnis 12 kann, wie hier gezeigt, der zweiten Pumpe 2 vorgeschaltet sein. Das Vorratsbehältnis 12 enthält vorzugsweise ein Reinigungsmittel, so dass die zweite Pumpe 2 und/oder die Leitung zwischen der zweiten Pumpe 2 und dem Ausgangs-Ventil 5 und/oder den Ausgängen 6, 7 gereinigt werden kann.

Zur Probenteilung wird zunächst eine Primärprobe oder eine Probe in die Probenkammer 4 eingebracht und kann dort mit den Mitteln aus den Vorratsbehältnis 8, 9, 10 konditioniert werden. Diese Mittel werden mittels der ersten Pumpe 1 in die Probenkammer 4 gefördert. Die konditionierte Probe wird mit der ersten Pumpe 1 aus der Probenkammer 4 in die zweite Leitung 3b gepumpt und gleichzeitig durch die zweiten Pumpe 2 in die dritte Leitung 3c gefördert, so dass die Probe am Ausgangsventil 5 in zwei repräsentative Teilproben aufgeteilt wird, von denen eine das Leitungssystem 3 durch einen der Ausgänge 6, 7 verlässt und die andere in die dritte Leitung 3c gefördert und in einem weiteren Schritt mittels der zweiten Pumpe 2 aus dem Leitungssystem 3 hinausgefördert werden kann. Die erste und zweite Pumpe 1, 2 laufen volumetrisch synchron und können gleiche oder unterschiedliche Fördermengen aufweisen. Die beide Pumpen 1, 2 können beispielsweise Taumelkolbenpumpen oder Dosierpumpen sein.

Die Probe wird nun in zwei repräsentative Teilproben gleicher Zusammensetzung aufgeteilt, wenn das Ausgangs-Ventil 5, die beiden Pumpen 1, 2 und den ersten Ausgang 6 miteinander verbindet. Aufgrund der synchronen Förderung der beiden Pumpen 1, 2 wird ein erster Teil der Probe durch den ersten Ausgang 6 aus dem Leitungssystem 3 als erste Teilprobe entfernt und ein zweiter Teil, die zweite Teilprobe, in die dritte Leitung 3c zwischen der zweiten Pumpe 2 und dem Ausgangs-Ventil 5 gefördert. Vorzugweise ist die dritte Leitung 3c so ausgelegt, dass sein Volumen gross genug für die Aufnahme der zweiten Teilprobe ist, ohne dass diese mit der zweiten Pumpe 2 in Kontakt kommt.

Sobald die erste Teilprobe das Leitungssystem 3 durch den Ausgang 6 verlassen hat und beispielsweise in das in Figur 1 gezeigte erste Behältnis 13 eingebracht wurde, kann das Ausgangs-Ventil 5 auf den zweiten Ausgang 7 umgestellt werden und die zweite Teilprobe über den Ausgang 7 in das zweite Behältnis 14 eingebracht werden, indem die zweite Pumpe 2 umgeschaltet wird und die Teilprobe aus dem Leitungssystem 3 fördert.

Die Ansteuerung der beiden Pumpen 1, 2 sowie auch der Ventile 11, 5 erfolgt durch eine Steuereinheit 27, wie es in Figur 1 angedeutet ist.

Auf diese Weise kann eine Probe in zwei repräsentative Teilproben aufgeteilt werden, die beide im Wesentlichen dieselbe Zusammensetzung aufweisen wie die Probe. Da beide Pumpen 1, 2 volumetrisch synchron laufen kann selbst eine zeitlich inhomogene Probe in zwei repräsentative Teilproben aufgeteilt werden, da die Probe kontinuierlich am Ausgangs-Ventil 5 aufgeteilt wird. Die Teilproben haben dieselbe Zusammensetzung wie die Probe und stellen ein Abbild der zeitlichen Verteilung der Probensubstanz in der Probe dar. Die Teilproben und auch die Probe sind repräsentativ für das Medium.

Das Volumen-Verhältnis der beiden Teilproben zueinander wird durch das Verhältnis der Fördermengen der ersten und zweiten Pumpe 1, 2 und/oder durch das Verhältnis der Leitungsquerschnitte der zweiten und dritten Leitung 3b, 3c bestimmt. So kann beispielsweise eine 10 ml Probe in zwei 5 ml Teilproben geteilt werden, wenn die Fördermengen und die Leitungsquerschnitte gleich sind, oder in eine 2 ml und eine 8 ml Teilprobe, wenn die Fördermengen oder die Leitungsquerschnitte im Verhältnis 1:4 zueinander stehen. Selbstverständlich kann mindestens eine der Teilproben in einem weiteren Schritt weiter aufgeteilt werden. Der Probenteiler kann somit über die Wahl der ersten und zweiten Pumpe und/oder der Leitungsquerschnitte der zweiten und dritten Leitung 3b, 3c eine Probe in mehrere Teilproben mit gleichen oder unterschiedlichen Volumina aufteilen, wie es für den Anwender und/oder einen nachfolgenden Analyseschritt vorteilhaft ist. Dieses ist insbesondere für die Bereitstellung von Analyseproben vorteilhaft, da so beispielsweise Proben, welche automatisiert einem Prozess entnommen werden, direkt in repräsentative Teilproben mit geeigneten Volumina aufgeteilt werden können.

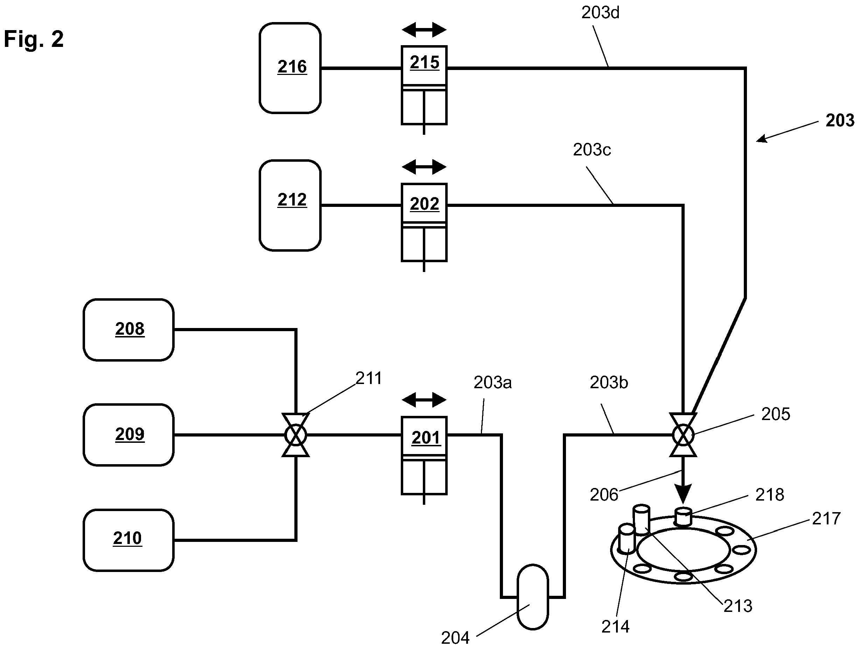

Figur 2 zeigt ein weiteres Ausführungsbeispiel eines erfindungsgemässen Probenteilers, welcher im Unterschied zu der in Figur 1 gezeigten Ausführung eine dritte Pumpe 215 mit einem weiteren Vorratsbehältnis 216 und alternative Behältnisse zur Aufnahme der Teilproben aufweist.

Die erste, zweite und dritte Pumpe 201, 202, 215 laufen volumetrisch synchron, wobei alle drei Pumpen 201, 202, 215 in diesem Ausführungsbeispiel als bidirektionale Pumpen ausgestaltet sind. Die drei Pumpen 201, 202, 215 können gleiche oder unterschiedliche Fördermengen aufweisen.

Die Pumpen 201, 202, 215 sind über ein Ausgangs-Ventil 205 mit einem einzelnen Ausgang 206 verbunden. Das Ausgangs-Ventil 205 ist als Mehrwege-Ventil ausgestaltet. Das Ausgangs-Ventil 205 kann so geschaltet werden, dass alle Pumpen 201, 202, 215 und der Ausgang 206 verbunden sind oder dass nur die zweite oder dritte Pumpe 202, 215 mit dem Ausgang 206 verbunden ist. Wie bereits im Zusammenhang mit Figur 1 beschrieben, kann eine Primärprobe in der Probenkammer 204 konditioniert werden und mittels der drei Pumpen 201, 202, 215 hier in drei Teilproben aufgeteilt werden. Die Probe wird mit der ersten Pumpe 201 durch die zweite Leitung 203b zum Ausgangs-Ventil 205 gefördert und dort aufgeteilt, in dem eine erste Teilprobe das Leitungssystem 203 durch den Ausgang 206 verlässt, die zweite Teilprobe in die dritte Leitung 203c zwischen dem Ausgangs-Ventil 205 und der zweiten Pumpe 202 und die dritte Teilprobe in eine vierte Leitung 203d zwischen dem Ausgangs-Ventil 205 und der dritten Pumpe 215 transportiert wird. Anschliessend kann das Ausgangs-Ventil 205 umgeschaltet werden, so dass die zweite oder die dritte Teilprobe aus der dritten oder vierten Leitung 203c, 203d durch Umschalten der zweiten oder dritten Pumpe 202, 215 aus dem Leitungssystem 203 gefördert wird. Je nach Stellung des Ausgangs-Ventils 205, werden während des Ausbringens der zweiten oder dritten Teilprobe jeweils nur die entsprechende Pumpe aktiviert und die anderen abgeschaltet, damit die verbleibende Teilprobe nicht in die Pumpe gefördert wird.

Zur Trennung der drei Teilproben befindet sich am Ausgang 206 ein geeignetes Probengestell 217, welches mit Probenbehältnissen 213, 214, 218 für die drei Teilproben bestückt ist. Das Probengestell 217 ermöglicht die Bereitstellung von einem geeigneten Behältnis 213, 214, 218 für jede Teilprobe. Die Bewegung des Probengestells 217, genauer die Bereitstellung neuer Probengefässe 213, 214, 218 kann manuell oder automatisiert erfolgen. Im Laborbereich sind verschiedene Probengestelle, wie zum Beispiel Probenkarussels oder Probenracks bekannt. Die Probengefässe 213, 214, 218 sind hier beispielhaft in drei unterschiedlichen Grössen dargestellt, können jedoch selbstverständlich auch alle gleich gross sein.

Anstelle von nur einem Ausgang 206 kann der Probenteiler selbstverständlich auch mehrere Ausgänge aufweisen, welche mindestens einer Pumpe zugeordnet sind, wie es in Figur 1 gezeigt ist.

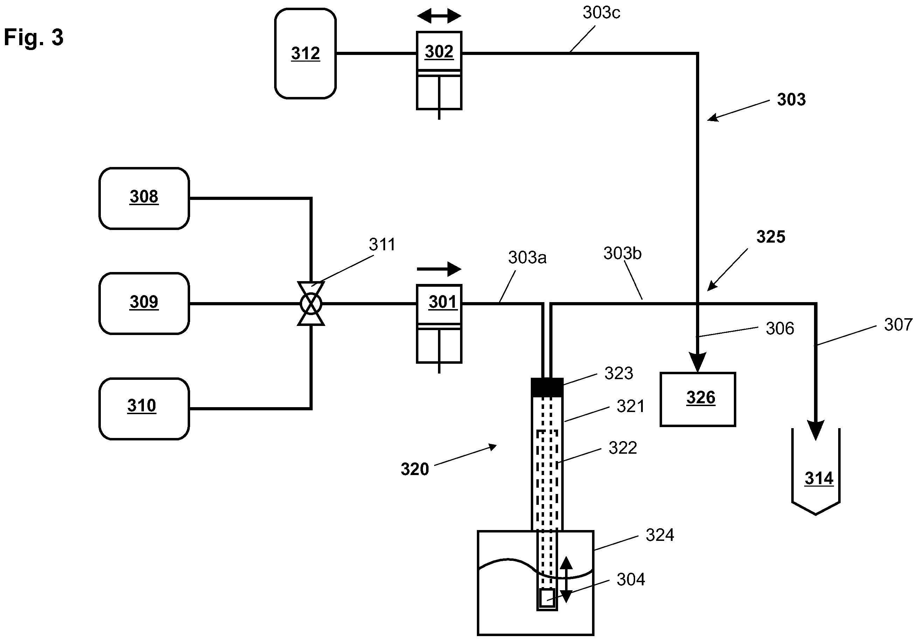

Figur 3 zeigt ein Probenahme-System mit einem Probennehmer 320 und einem Probenteiler mit zwei Pumpen 301, 302. Die meisten Elemente des Probenteilers entsprechen den in Figuren 1 und 2 gezeigten Probenteilern, wobei eine Probenkammer 304 im Probennehmer 320 angeordnet ist. Der Probenteiler kann zudem mindestens eine der Teilproben zu einem Analysegerät 326 weiterleiten. Vorzugsweise ist der Probenteiler derart ausgestaltet, dass die Teilprobe ein auf das entsprechende Analysegerät 326 angepasstes Volumen aufweist. Als Analysegerät 326 können eine Vielzahl von Geräten eingesetzt werden, wie beispielweise ein HPLC-Gerät (HPLC - High performance liquid chromatography), ein Gaschromatograph, ein Massenspektrometer, ein Infrarot-, Nahinfrarot-, UV/VIS- oder Raman-Spektrometer, ein NMR-Spektrometer oder ein anderes zur Analyse der Teilprobe geeignetes Gerät sein

Im Unterschied zu den in Figur 1 und 2 gezeigten Probenteilern umfasst der Probenteiler gemäss Figur 3 kein Ausgangs-Ventil. Die beiden Pumpen 301, 302 sind hier über die zweite Leitung 303b bzw. die dritte Leitung 303c direkt mit den Ausgängen 306, 307 über ein geeignetes Verbindungselement 325 verbunden. Im Betrieb wird eine Probe von der ersten, unidirektionalen Pumpe 301 aus der Probenkammer 304 zum Verbindungselement 325 geleitet und dort geteilt, indem eine erste Teilprobe von der ersten Pumpe 301 zu einem der Ausgänge 307, 306 geleitet und eine zweite Teilprobe von der zweiten Pumpe 302 in die dritte Leitung 303c zwischen der zweiten Pumpe 302 und dem Verbindungselement 303 geleitet wird. Wenn die erste Teilprobe abgefüllt ist, wird die erste Pumpe 301 abgeschaltet und die zweite Pumpe 302 umgeschaltet, so dass nun die zweite Teilprobe zum gewählten Ausgang 307, 306 geleitet wird.

Zur Auftrennung der Teilproben, kann jeweils einer der Ausgänge 307, 306 abgesperrt werden.

Selbstverständlich kann der Probenteiler auch ein geeignetes Mehrwege-Ventil und/oder nur einen einzelnen Ausgang aufweisen, wie es vorangehend beschrieben wurde.

Wie bereits vorangehend beschrieben, kann die erste Pumpe 301 die hier gezeigte unidirektionale oder eine bidirektionale Pumpe sein. Die Probenkammer 304 kann über die erste Leitung 303a und die erste Pumpe 301 mit verschiedenen Vorratsbehältnissen 308, 309, 310 verbunden sein, welche Substanzen zur Verdünnung oder Konditionierung der Primärprobe und/oder zur Reinigung der Probenkammer 304 umfassen. Vorzugsweise sind diese Vorratsbehältnisse über ein Ventil 311 der ersten Pumpe 301 vorgeschaltet.

Der in Figur 3 gezeigte Probennehmer 320 umfasst ein Gehäuse 321, in welchem ein linear-verschiebliches Element 322 und ein Antrieb 323 angeordnet ist. Das Element 322 kann mittels des Antriebs 323 aus dem Gehäuse 321 hinaus und wieder hinein bewegt werden. Wie hier angedeutet ist der Probennehmer 320 so an ein Behältnis 324 in dem sich ein Medium befindet angeschlossen, dass das Element 322 in das Medium ein- oder ausgefahren werden kann, so dass eine dem Medium entnommene Primärprobe in der vom Gehäuse 321 umschlossenen Probenkammer 304 konditioniert und/oder verdünnt werden kann, bevor die Probe anschliessend durch den Probenteiler in eine der Anzahl Pumpen entsprechende Anzahl von repräsentativen Teilproben aufgeteilt werden kann. An dem mit dem Medium in Kontakt kommenden Ende des Elements 322 ist eine Probenkammer 304 angeordnet, welche in das Leitungssystem 3 des Probenteilers eingebunden ist.

Obwohl die Erfindung durch die Darstellung spezifischer Ausführungsbeispiele beschrieben worden ist, ist es offensichtlich, dass zahlreiche weitere Ausführungsvarianten in Kenntnis der vorliegenden Erfindung geschaffen werden können, beispielsweise indem die Merkmale der einzelnen Ausführungsbeispiele miteinander kombiniert und/oder einzelne Funktionseinheiten der Ausführungsbeispiele ausgetauscht werden. Insbesondere kann ein erfindungsgemässer Probenteiler mit unterschiedlichen bekannten Probennehmern kombiniert werden. Der Probenteiler kann mit oder ohne Ausgangs-Ventil ausgestaltet werden. Die Teilproben können in verschiedenen Behältnissen aufgefangen werden, im Zusammenhang mit den Figuren sind exemplarisch verschiedene genannt worden. Zudem kann der Probenteiler mehr oder weniger als die gezeigten Vorratsbehältnisse mit Mitteln zur Konditionierung oder Reinigung umfassen. Weiterhin kann der Probenteiler zwei oder mehr Pumpen sowie ein Leitungssystem mit Leitungen umfassen, welche gleiche oder unterschiedliche Leitungsquerschnitte aufweisen, wobei die erste Pumpe unidirektional oder bidirektional ausgestaltet sein kann, so dass eine Probe vorzugsweise in eine der Anzahl von Pumpen entsprechen Anzahl von repräsentative Teilproben aufgeteilt werden kann.

### Bezugszeichenliste

- 1, 201, 301: erste Pumpe
- 2, 202, 302: zweite Pumpe
- 3, 203, 303: Leitungssystem
- 3a, 203a, 303a: erste Leitung
- 3b, 203b, 303b: zweite Leitung
- 3c, 203c, 303c: dritte Leitung
- 203d: vierte Leitung
- 4, 204, 304: Probenkammer
- 5, 205: Ausgangsventil
- 6, 206, 306: Ausgang des Leitungssystems
- 7, 307: Ausgang des Leitungssystems
- 8, 208, 308: Vorratsbehältnis
- 9, 209, 309: Vorratsbehältnis
- 10, 210, 310: Vorratsbehältnis
- 11, 211, 311: Ventil
- 12, 21, 312: Vorratsbehältnis
- 13, 213: Probengefäss
- 14, 214, 314: Probengefäss
- 215: Dritte Pumpe
- 216: Vorratsbehältnis
- 217: Probengestell
- 218: Probengefäss
- 19: Anschluss
- 320: Probennehmer
- 321: Gehäuse
- 322: linear-verschiebliches Element
- 323: Antrieb
- 24, 324: Behältnis für Medium
- 325: Verbindungselement
- 326: Analysegerät
- 27: Steuereinheit

## Patentansprüche

1. Probenteiler zur Aufteilung einer Probe, insbesondere einer zeitlich inhomogenen Probe, in zwei oder mehr Teilproben mit
einem Leitungssystem (3, 203, 303) mit einer ersten Leitung (3a, 203a, 303a), einer zweiten Leitung (3b, 203b, 303b), mindestens einer dritten Leitung (3c, 203c, 203d, 303c) und mindestens einem Ausgang (6, 206, 306; 7, 307) zur Entnahme der zwei oder mehr Teilproben; einer Probenkammer (4, 204, 304) für die inhomogene Probe, welche mit dem Leitungssystem (3, 203, 303) verbunden ist und einen Einlass für die inhomogene Probe aufweist; einer ersten Pumpe (1, 201, 301) mit einer ersten Fördermenge und mindestens einer zweiten Pumpe (2, 202, 302) mit einer zweiten Fördermenge, wobei die mindestens eine zweite Pumpe (2, 202, 302; 215) eine bidirektionale Pumpe ist, und wobei die erste und die mindestens eine zweite Pumpe (1, 201, 301; 2, 202, 302; 215) die Probe im Leitungssystem (3, 203, 303) befördern; **dadurch gekennzeichnet, dass** die Probekammer (4, 204, 304) zwischen der erste Pumpe (1, 201, 301) und dem mindestens einen Ausgang (6, 206, 306; 7, 307) des Leitungssystems (3, 203, 303) angeordnet ist; die erste Leitung zwischen der ersten Pumpe und der Probenkammer, die zweite Leitung zwischen der Probenkammer und dem mindestens einen Ausgang und die mindestens eine dritte Leitung zwischen der mindestens einen zweiten Pumpe und dem mindestens einen Ausgang angeordnet ist umfasst, wobei die Leitungen (3a, 3b, 3c, 203a, 203b, 203c, 203d, 303a, 303b, 303c) gleichförmige Leitungsquerschnitte aufweisen oder wobei zumindest die zweite und dritte Leitung (3b, 3c, 203b,203c, 303b, 303c) unterschiedliche Leitungsquerschnitte aufweisen; und die erste Pumpe (1, 201, 301) und die mindestens eine zweite Pumpe (2, 202, 302; 215) synchron laufen, so dass die inhomogene Probe beim Durchlaufen des Leitungssystems (3, 203, 303) gleichzeitig in mindestens zwei repräsentative Teilproben aufgeteilt wird.

2. Probenteiler nach Anspruch 1, **dadurch gekennzeichnet, dass** die erste Pumpe (1, 201, 301) als unidirektionale Pumpe ausgestaltet ist

3. Probenteiler nach Anspruch 1 oder 2, **dadurch gekennzeichnet, dass** die mindestens eine zweite Pumpe (2, 202, 302; 215) eine von der ersten Pumpe (1, 201, 301) abweichenden Fördermenge aufweist.

4. Probenteiler nach Anspruch 1 oder 2, **dadurch gekennzeichnet, dass** die Fördermenge der ersten und der mindestens einen zweiten Pumpe (1, 201, 301; 2, 202, 302; 215) gleich ist.

5. Probenteiler nach einem der Ansprüche 1 bis 4, **dadurch gekennzeichnet, dass** das Leitungssystem (3, 203,303) mindestens einen Anschluss umfasst, welcher die Zuleitung mindestens eines Spülmediums, eines Quench-Mediums und/oder einer anderen Substanz zur Konditionierung der Probe ermöglicht.

6. Probenteiler nach einem der Ansprüche 1 bis 5, **dadurch gekennzeichnet, dass** mindestens ein Ausgang (206, 306) mit einem Probengestell (217) oder mit einem Analysegerät (326) verbunden ist.

7. Probenteiler nach Anspruch 6, **dadurch gekennzeichnet, dass** das Analysegerät (326) ein HPLC-Gerät; ein Gaschromatograph; ein Massenspektrometer; ein Infrarot-, Nahinfrarot-, UV/VIS- oder Raman-Spektrometer; oder ein NMR-Spektrometer ist.

8. Probenahme-System mit einem Probenteiler zur Aufteilung einer Probe, insbesondere einer zeitlich inhomogenen Probe, in mindestens zwei repräsentative Teilproben nach einem der Ansprüche 1 bis 7.

9. Probenahme-System nach Anspruch 8, **dadurch gekennzeichnet, dass** der Probennehmer (320) ferner ein Gehäuse (321) und ein linear-verschiebliches Element (322) umfasst, wobei das linear-verschiebliche Element (322) verschieblich im Gehäuse (321) gelagert ist und wobei die Probenkammer (304) an einem Ende des linear-verschieblichen Elements (322) angeordnet ist, so dass die Probenkammer (304) zur Probenahme durch Verschiebung des linear-verschieblichen Elements (322) in ein Medium eintaucht oder herausgezogen wird.

10. Verfahren zur Aufteilung einer Probe, insbesondere einer zeitlich inhomogenen Probe, in mindestens zwei repräsentative Teilproben mit einem Probenteiler gemäss einem der Ansprüche 1 bis 7, wobei das Verfahren die folgenden Schritt aufweist:
• Inbetriebnahme der ersten und der mindestens einen zweiten Pumpe (1, 201, 301; 2, 202, 302; 215), so dass diese volumetrisch synchron arbeiten;
• Einbringen einer Probe in die Probenkammer (4, 204, 304) des Leitungssystems (3, 203, 303);
• Aufteilen der Probe in eine erste und mindestens eine zweite repräsentative Teilprobe durch die synchron laufende erste und mindestens eine zweite Pumpe (1, 201, 301; 2, 202, 302; 215).

11. Verfahren nach Anspruch 10, **dadurch gekennzeichnet, dass** die erste und/oder die zweite Teilprobe direkt in ein mit dem Probenteiler verbundenes Analysegerät (326) eingebracht werden.

## Claims

1. A sample splitter for splitting a sample, in particular a temporally inhomogeneous sample, into two or more aliquots, having:
a conduit system (3, 203, 303) with a first conduit (3a, 203a, 303a), a second conduit (3b, 203b, 303b), at least one third conduit (3c, 203c, 203d, 303c) and at least one outlet (6, 206, 306; 7, 307) for taking the two or more aliquots;
a sample chamber (4, 204, 304) for the inhomogeneous sample, which is connected to the conduit system (3, 203, 303) and comprises an inlet for the inhomogeneous sample;
a first pump (1, 201, 301) with a first flow rate and at least one second pump (2, 202, 302) with a second flow rate, wherein the at least one second pump (2, 202, 302; 215) is a bidirectional pump, and wherein the first and the at least one second pump (1, 201, 301; 2, 202, 302; 215) convey the sample in the conduit system (3, 203, 303);
**characterized in that** the sample chamber (4, 204, 304) is disposed between the first pump (1, 201, 301) and the at least one outlet (6, 206, 306; 7, 307) of the conduit system (3, 203, 303);
**in that** the first conduit is comprised between the first pump and the sample chamber, the second conduit is disposed between the sample chamber and the at least one outlet and the at least one third outlet is disposed between the at least one second pump and the at least one outlet, wherein the conduits (3a, 3b, 3c, 203a, 203b, 203c, 203d, 303a, 303b, 303c) have identical cross-sections or wherein at least the second and third conduit (3b, 3c, 203b, 203c, 303b, 303c) have different cross-sections; and
**in that** the first pump (1, 201, 301) and the at least one second pump (2, 202, 302; 215) operate synchronously, so that as it passes through the conduit system (3, 203, 303), the inhomogeneous sample is simultaneously split into at least two representative aliquots.

2. The sample splitter according to claim 1, **characterized in that** the first pump (1, 201, 301) is configured as a unidirectional pump.

3. The sample splitter according to claim 1 or 2, **characterized in that** the at least one second pump (2, 202, 302; 215) has a flow rate which differs from that of the first pump (1, 201, 301).

4. The sample splitter according to claim 1 or 2, **characterized in that** the flow rates for the first and the at least one second pump (1, 201, 301; 2, 202, 302; 215) are equal.

5. The sample splitter according to any of claims 1 to 4, **characterized in that** the conduit system (3, 203, 303) comprises at least one supply connection which allows at least one rinse medium, quench medium and/or another substance to be supplied in order to condition the sample.

6. The sample splitter according to any of claims 1 to 5, **characterized in that** at least one outlet (206, 306) is connected to a sample rack (217) or to an analytical instrument (326).

7. The sample splitter according to claim 6, **characterized in that** the analytical instrument (326) is an HPLC instrument; a gas-chromatograph; a mass spectrometer; an infrared, near-infrared, UV/VIS or Raman spectrometer; or an NMR spectrometer.

8. A sampling system with a sample splitter for splitting a sample, in particular a temporally inhomogeneous sample, into two or more aliquots, according to any claims 1 to 7.

9. The sampling system according to claim 8, **characterized in that** the sampler (320) further comprises a housing (321) and a linearly displaceable element (322), wherein the linearly displaceable element (322) is displaceably mounted in the housing (321) and wherein the sample chamber (304) is disposed at one end of the linearly displaceable element (322) in a manner such that, in order to take a sample, the sample chamber (304) is introduced into or withdrawn from a medium by displacing the linearly displaceable element (322).

10. A method for splitting a sample, in particular a temporally inhomogeneous sample, into at least two representative aliquots using a sample splitter according to any of claims 1 to 7, wherein the method comprises the following steps:
- starting up the first and the at least one second pump (1, 201, 301; 2, 202, 302; 215) so that they work together in a volumetrically synchronous manner;
- introducing a sample into the sample chamber (4, 204, 304) of the conduit system (3, 203, 303);
- splitting the sample into a first and at least one second representative aliquot by means of the synchronously operating first and at least one second pump (1, 201, 301; 2, 202, 302; 215).

11. The method according to claim 10, **characterized in that** the first and/or the second aliquot is introduced directly into an analytical instrument (326) which is connected to the sample splitter.

## Revendications

1. Diviseur d'échantillons destiné à répartir un échantillon, en particulier un échantillon non homogène dans le temps, en deux ou plusieurs échantillons partiels, comprenant un système de conduites (3, 203, 303) comprenant une première conduite (3a, 203a, 303a), une deuxième conduite (3b, 203b, 303b), au moins une troisième conduite (3c, 203d, 303c) et au moins une sortie (6, 206, 306; 7, 307) pour le retrait des deux ou plusieurs échantillons partiels;
une chambre d'échantillons (4, 204, 304) pour l'échantillon non homogène, laquelle est reliée au système de conduites (3, 203, 303), et comporte une entrée pour l'échantillon non homogène;
une première pompe (1, 201, 301) avec un premier débit et au moins une deuxième pompe (2, 202, 302) avec un deuxième débit, l'au moins une deuxième pompe (2, 202, 302; 215) étant une pompe bidirectionnelle, et la première ainsi que l'au moins une deuxième pompe (1, 201, 301; 2, 202, 302 ; 215) transportant l'échantillon dans le système de conduites (3, 203, 303);
**caractérisé en ce que** la chambre d'échantillons (4, 204, 304) est placée entre la première pompe (1, 201, 301) et l'au moins une sortie (6, 206, 306; 7, 307) du système de conduites (3, 203, 303);
la première conduite est agencée entre la première pompe et la chambre d'échantillons, la deuxième conduite est agencée entre la chambre d'échantillons et l'au moins une sortie, et l'au moins une troisième conduite est agencée entre l'au moins une deuxième pompe et l'au moins une sortie, les conduites (3a, 3b, 3c, 203a, 203b, 203c, 203d, 303a, 303b, 303c) présentant des sections transversales de conduites uniformes, et au moins la deuxième et la troisième conduite (3b, 3c, 203b, 203c, 303b, 303c) présentant des sections transversales de conduite différentes;
et la première pompe (1, 201, 301) et l'au moins une deuxième pompe (2, 202, 302; 215) fonctionnent de façon synchrone, de sorte que l'échantillon non homogène est divisé simultanément en au moins deux échantillons partiels représentatifs lors du passage à travers le système de conduites (3, 203, 303).

2. Diviseur d'échantillons selon la revendication 1, **caractérisé en ce que** la première pompe (1, 201, 301) est conçue comme une pompe unidirectionnelle.

3. Diviseur d'échantillons selon la revendication 1 ou 2, **caractérisé en ce que** l'au moins une deuxième pompe (2, 202, 302; 215) présente un débit différent de celui de la première pompe (1, 201, 301).

4. Diviseur d'échantillons selon la revendication 1 ou 2, **caractérisé en ce que** le débit de la première et de l'au moins une deuxième pompe (1, 201, 301; 2, 202, 302; 215) est identique.

5. Diviseur d'échantillons selon l'une des revendications 1 à 4, **caractérisé en ce que** le système de conduites (3, 203, 303) comporte au moins un raccord permettant d'alimenter au moins un fluide de rinçage, un fluide de trempage et/ou une autre substance pour le conditionnement de l'échantillon.

6. Diviseur d'échantillons selon l'une des revendications 1 à 5, **caractérisé en ce qu'**au moins une sortie (206, 306) est reliée à un porte-échantillons (217) ou à un dispositif d'analyse (326).

7. Diviseur d'échantillons selon la revendication 6, **caractérisé en ce que** le dispositif d'analyse (326) est un dispositif HPLC; un chromatographe en phase gazeuse; un spectromètre de masse; un spectromètre infrarouge, infrarouge proche, UV/VIS ou Raman; ou un spectromètre RMN.

8. Système d'échantillonnage comprenant un diviseur d'échantillons destiné à répartir un échantillon, en particulier un échantillon non homogène dans le temps, en deux ou plusieurs échantillons partiels selon l'une des revendications 1 à 7.

9. Système d'échantillonnage selon la revendication 8, **caractérisé en ce que** l'échantillonneur (320) comprend en outre un boîtier (321) et un élément déplaçable linéairement (322), dans lequel l'élément déplaçable linéairement (322) est monté de façon déplaçable dans le boîtier (321), et dans lequel la chambre d'échantillons (304) est placée à une extrémité de l'élément déplaçable linéairement (322), de sorte que pour l'échantillonnage, la chambre d'échantillons (304) plonge dans un fluide ou est retirée de celui-ci par déplacement de l'élément déplaçable linéairement (322).

10. Procédé pour la répartition d'un échantillon, en particulier d'un échantillon non homogène dans le temps, en au moins deux échantillons partiels représentatifs, avec un diviseur d'échantillons selon l'une des revendications 1 à 7, le procédé comprenant les étapes suivantes :
• mise en marche de la première et de l'au moins une deuxième pompe (1, 201, 301; 2, 202, 302; 215), de manière à ce que celles-ci fonctionnent de façon volumétriquement synchrone;
• introduction d'un échantillon dans la chambre d'échantillons (4, 204, 304) du système de conduites (3, 203, 303);
• répartition de l'échantillon en un premier et au moins un deuxième échantillon partiel représentatif par la première et l'au moins une deuxième pompe (1, 201, 302; 2, 202, 302; 215) fonctionnant de façon synchrone.

11. Procédé selon la revendication 10, **caractérisé en ce que** le premier et/ou le deuxième échantillon partiel sont introduits directement dans un dispositif d'analyse (326) relié au diviseur d'échantillons.
